# FASCICULE DE BREVET EUROPEEN

(11) **EP 0 822 363 B1**
(45) Date de publication et mention de la délivrance du brevet: **15.11.2000**
(21) Numéro de dépôt: 97401663.6
(22) Date de dépôt: 10.07.1997
(51) Int. Cl.: F16L 3/00, F16L 3/10, F16L 5/00

(54) **Dispositif de fixation destiné à assujettir un organe de jonction de tubes à une plaquette qu'il traverse par une ouverture associée**
Befestigungsvorrichtung zum Montieren eines Rohrverbindungselements in der Öffnung einer Platte
Fastening device for installing a pipe connecting member into a board opening

(30) Priorité: 24.07.1996 FR 9609291
(43) Date de publication de la demande: 04.02.1998
(73) Titulaire: TI GROUP AUTOMOTIVE SYSTEMS, 37530 Nazelles Negron (FR)
(72) Inventeur: De Giacomoni, Jacques, 37400 Amboise (FR)
(74) Mandataire: Jaunez, Xavier

(56) Documents cités:
- DE-C- 4 438 057
- GB-A- 1 329 503
- US-A- 4 621 839
- US-A- 5 272 934

## Description

L'invention concerne un dispositif de fixation destiné à assujettir un organe de jonction de tubes à une plaquette qu'il traverse par une ouverture associée, ledit organe de jonction étant en appui contre une face de la plaquette par un élément polygonal analogue à un écrou et se prolongeant au-delà de ladite plaquette par une portion passant dans ladite ouverture, conformément au préambule de la revendication 1. Un domaine typique d'application est celui de la construction automobile, auquel cas la plaquette est une patte solidaire de la caisse du véhicule, et l'organe de jonction de tubes est par exemple une jonction rigide sertie entre un tube flexible et un tube rigide de canalisation de frein. Toutefois, une telle application ne constitue qu'un exemple, et l'invention n'est pas limitée à ce type de fixation.

On cherche dans la mesure du possible à réaliser une fixation des organes de jonction de tubes qui assure un maintien en place aussi fiable que possible, même lorsque la plaquette de support est soumise à des chocs et/ou à des vibrations. C'est ainsi que l'on cherche de plus en plus à réaliser une fixation capable d'assurer simultanément un maintien en translation et un maintien en rotation de l'organe de jonction par rapport à la plaquette qu'il traverse.

En général, l'organe de jonction de tubes qu'il convient d'assujettir à une plaquette, est en appui contre une face de cette plaquette par un élément polygonal analogue à un écrou, et il se prolonge au-delà de ladite plaquette par une portion passant dans l'ouverture de traversée de celle-ci.

On a déjà proposé de nombreuses solutions pour réaliser de telles fixations, notamment dans le domaine de la construction automobile.

On connaît ainsi depuis une cinquantaine d'années une technique utilisant, du côté opposé à la face d'appui de la plaquette, un étrier en forme de fourche dont les deux branches présentent un bombement central en appui contre un épaulement terminal de l'organe de jonction, afin de solliciter cet organe de jonction contre la face d'appui de la plaquette, pour assurer ainsi le blocage en translation dudit organe de translation, tout en prévoyant, sur la face d'appui de la plaquette, des plots saillants de verrouillage avec lesquels coopère l'élément polygonal de l'organe de jonction. On utilise par exemple, pour un élément hexagonal, un ensemble de quatre plots disposés selon un carré, ce qui assure la fonction d'anti-rotation désirée. L'étrier est quant à lui enfoncé au maillet, afin de bloquer l'organe de jonction ainsi mis en place. Cette technique présente cependant un certain nombre d'inconvénients, parmi lesquels l'enfoncement au maillet qui est en général contraire aux règles de fabrication dans le domaine des véhicules automobiles, ainsi que la nécessité de prévoir des plots en saillie sur une plaquette, ce qui exige une passe de frappe à froid.

On connaît divers autres dispositifs de fixation du type circlips, agencés pour être en appui sur une face de la plaquette et contre un épaulement de l'organe de jonction. Ces dispositifs permettent d'assurer aisément un blocage en translation de l'organe de jonction, mais n'assurent aucune fonction d'anti-rotation.

On connaît également un système utilisant, à la place des plots saillants d'anti-rotation, un agencement de cannelures, et, de l'autre côté de la plaquette, un élément ressort en forme de oméga, dont les extrémités retournées sont en appui contre la face concernée de la plaquette, et dont le centre est traversé par un embout de l'organe de jonction. Un tel clip en oméga présente cependant des inconvénients importants, parmi lesquels on peut citer les difficultés de mise en place, dans la mesure où il faut tenir le clip lors du vissage, en exerçant une précontrainte de ce clip avant de commencer le vissage, et en outre la génération par le clip en oméga d'un effort de traction qui tend à tirer le tube rigide hors de sa jonction, générant ainsi des efforts qui tendent à altérer l'étanchéité de ladite jonction. En outre, avec un tel clip en oméga, on ne peut dégager l'organe de jonction des tubes de la plaquette sans démonter la jonction elle-même, ce qui oblige par exemple à purger le circuit de freinage du véhicule.

On peut aussi citer les dispositifs de fixation réalisés sous la forme d'un double étrier agencé d'un même côté de la plaquette, afin d'assurer à la fois le maintien en translation et l'anti-éjection du double étrier mis en place, la fonction d'anti-rotation étant quant à elle assurée de la même façon que dans l'exemple précité à plots ou crantages coopérant avec l'élément polygonal de l'organe de jonction.

Enfin, on pourra également se référer aux documents DE-A-44 38 057, GB-A-1.329.503, US-A-5,272,934 et US-A-4,621,839 ci-après commentés, qui illustrent l'arrière-plan technologique.

Le document DE-A-44 38 057 décrit un dispositif de fixation pour tube annelé à la paroi arrière d'un bâti de machine dans le domaine de l'électro-ménager. Il s'agit seulement d'un clip permettant d'encliqueter deux tubes annelés avant la mise en place sur la paroi arrière.

Le document GB-A-1 329 503 décrit une bride à deux mâchoires complémentaires enserrant un ou deux tubes au niveau d'un manchon passe-fil flexible.

Le document US-A-5,272,934 décrit un dispositif de fixation pour commande à câble, avec une plaquette d'accrochage munie de glissières latérales pour son insertion dans une encoche débouchante en U.

Le document US-A-4,621,839 décrit enfin une couronne de fixation d'un embout d'échangeur de chaleur, avec un rebord central en saillie.

L'invention a pour objet de réaliser un dispositif de fixation de structure simple, capable d'assurer simultanément un blocage en translation de l'organe de jonction et une fonction d'anti-rotation.

L'invention a également pour objet de réaliser un dispositif de fixation qui soit aisé à mettre en place ou à enlever, et qui soit capable de rester en place de façon fiable sur la plaquette concernée.

Conformément à l'invention, ce problème technique est résolu grâce à un dispositif de fixation du type précité qui est constitué par un cavalier destiné à enjamber la plaquette en prenant appui par sa base sur un bord libre de celle-ci, ledit cavalier présentant, du côté de la face d'appui, une première fourche dont les deux branches délimitent un contour interne agencé pour coopérer avec l'élément polygonal de l'organe de jonction en vue d'un blocage en rotation dudit organe de jonction, et, de l'autre côté, une deuxième fourche dont les deux branches enjambent la portion de prolongement de l'organe de jonction, et sont cintrées pour venir en appui à la fois contre l'autre face de la plaquette et contre un épaulement terminal de ladite portion de prolongement afin de solliciter l'organe de jonction contre la face d'appui de la plaquette en assurant ainsi un maintien en translation dudit organe de jonction.

Grâce à un tel cavalier, la fonction d'anti-rotation est assurée par le contour interne particulier de la première fourche du cavalier et par la base dudit cavalier qui est en appui sur le bord libre de la plaquette. Le cavalier étant conçu pour enjamber la plaquette, sa deuxième fourche assure seulement le maintien en translation de l'organe de jonction qui est bloqué en appui contre ladite plaquette.

De préférence, le contour interne de la première fourche du cavalier présente, au niveau de chaque branche, un décrochement agencé pour coopérer avec l'élément polygonal de l'organe de jonction pour empêcher l'éjection du cavalier mis en place.

Il est également intéressant de prévoir que le contour interne de la première fourche du cavalier présente, au niveau de chaque branche, une encoche agencée pour coopérer avec l'élément polygonal de l'organe de jonction pour à la fois assurer l'anti-rotation dudit organe de jonction et empêcher l'éjection du cavalier mis en place.

On pourra également prévoir que le contour interne de la première fourche du cavalier présente à la fois, au niveau de chaque branche, un décrochement et une encoche, qui sont agencés pour produire deux positions d'indexage angulaire. On dispose alors dans ce cas de la fonction anti-rotation, et de la fonction anti-éjection du cavalier mis en place, tout en disposant de deux positions d'indexage angulaire.

Avantageusement encore, les branches de la première fourche présentent une extrémité inclinée vers l'extérieur, formant rampe d'appui à l'insertion du cavalier coopérant avec la face externe de l'élément polygonal de l'organe de jonction. Une telle rampe d'appui facilite la mise en place du cavalier, l'opérateur n'ayant qu'à faire tourner l'organe de jonction autour de son axe jusqu'à l'encliquetage de la première fourche du cavalier sur l'élément polygonal dudit organe de jonction. De préférence, on pourra prévoir que chaque extrémité de branche se termine par une languette pliée vers l'extérieur destinée à faciliter l'extraction du cavalier mis en place.

Avantageusement encore, chaque branche de la deuxième fourche du cavalier présente un cintrage agencé pour définir un double appui sur la plaquette et un appui central sur l'épaulement terminal de l'organe de jonction. En particulier, lorsque le cavalier est mis en place, l'appui central des branches de la deuxième fourche est situé au niveau de l'axe de l'ouverture de la plaquette.

Il sera enfin avantageux de prévoir que ce cavalier soit réalisé en acier à ressort.

D'autres caractéristiques et avantages de l'invention apparaîtront plus clairement à la lumière de la description qui va suivre et des dessins annexés, concernant un mode de réalisation particulier, en référence aux figures où :
- la figure 1 est une vue en perspective illustrant un cavalier de fixation conforme à l'invention ;
- la figure 2 est une vue en bout du cavalier de la figure 1, sur laquelle on a illustré en traits mixtes un élément polygonal, ici hexagonal, faisant partie de l'organe de jonction à verrouiller, afin d'illustrer la fonction anti-rotation assurée par le cavalier, et aussi la fonction anti-éjection du cavalier mis en place ;
- la figure 3 est une vue latérale d'un ensemble monté sur une plaquette, avec le cavalier de fixation précité qui assure à la fois le maintien en translation de l'organe de jonction, et la fonction d'anti-rotation ;
- les figures 4a et 4b illustrent en perspective la mise en place du cavalier précité, vue du côté de la face d'appui de l'élément hexagonal de l'organe de jonction ; et
- les figures 5a et 5b illustrent de la même façon la mise en place vue du côté de la face opposée de la plaquette ;
- la figure 6 est une vue en perspective illustrant une variante du cavalier selon l'invention, avec une encoche supplémentaire prévue sur chaque branche de la première fourche, afin de disposer de deux positions d'indexage angulaire ;
- la figure 7 est une vue en bout qui est à rapprocher de celle de la figure 2, montrant deux positions d'un élément hexagonal bloqué en rotation entre les deux branches de la première fourche ;
- la figure 8 est une vue en perspective à rapprocher de la figure 4a, illustrant la mise en place du cavalier modifié des figures 6 et 7.

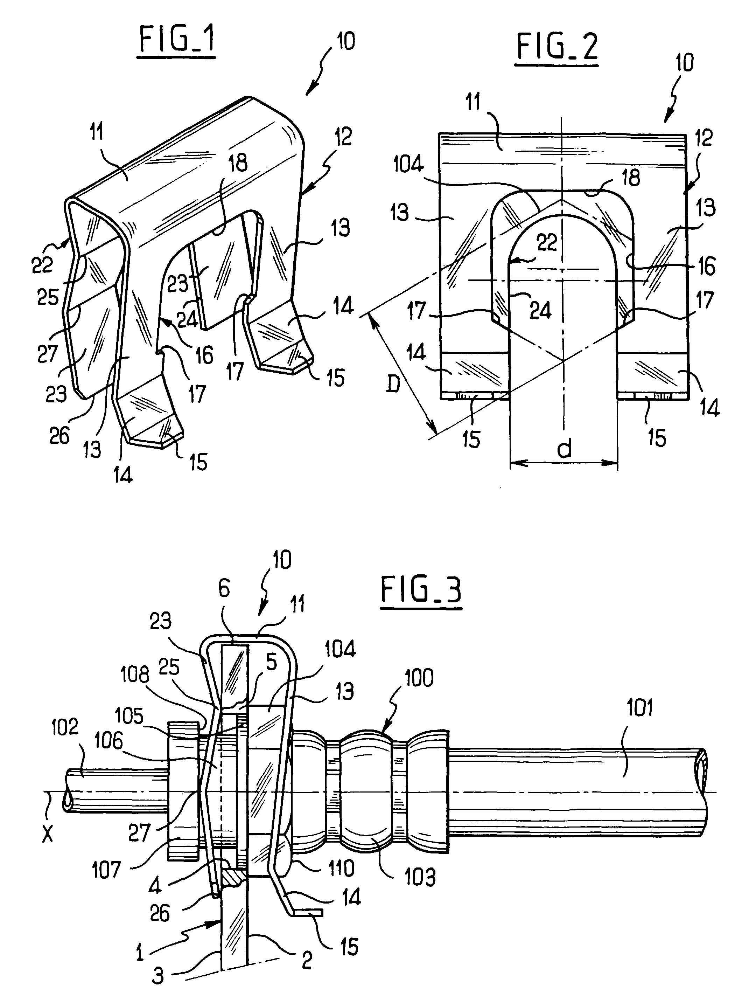

Les figures 1 et 2 permettent de distinguer un cavalier 10 présentant une base 11 de laquelle partent une première fourche 12 et une deuxième fourche 22. La première fourche 12 présente deux branches 13 délimitant entre elles un espace central dont le profil est défini par un contour interne noté 16. Ce contour interne présente un bord supérieur 18, ainsi que, pour chacune des deux branches 13, un décrochement 17 sur la fonction duquel il sera revenu plus loin plus en détail. Il est à noter que chacune des deux branches 13 présente une extrémité 14 inclinée vers l'extérieur, et qui se termine par une languette 15 pliée. La fonction de ces modalités d'exécution sera également expliquée plus loin plus en détail.

De l'autre côté de la base 11, la deuxième fourche 22 présente elle aussi deux branches 23 dont le contour interne est noté 24, ces deux branches étant cintrées en présentant deux lignes de pliage notées 25 et 27, les bords libres d'extrémité des branches étant quant à eux notés 26.

Avant de décrire plus en détail la double fonction assurée par les deux branches 13 de la première fourche 12 en référence à la figure 2, il convient tout d'abord de décrire l'agencement complet mis en place illustré sur la figure 3.

Sur la figure 3, on distingue ainsi un organe de jonction 100 qui assure la liaison entre un tube flexible 101 et un tube rigide 102, l'axe de l'ensemble étant noté X. L'organe de jonction 100 est ici type jonction sertie, et présente successivement une portion écrasée 103, un élément polygonal 104 analogue à un écrou, lequel est ici hexagonal, une portion cylindrique lisse 105, une portion cylindrique de plus petit diamètre 106, et enfin une portion cylindrique de plus grand diamètre que la précédente notée 107, définissant un épaulement d'appui noté 108. Bien que l'organe de jonction de tubes illustré ici soit tout à fait classique, il va de soi que l'invention ne sera pas limitée à la fixation d'un tel organe de jonction, mais sera applicable à d'autres types connus non illustrés ici, dans la mesure où ils présentent un élément polygonal analogue à un écrou et se prolongeant au-delà de la plaquette par une portion passant dans l'ouverture de ladite plaquette.

En l'espèce, la plaquette 1 présente une première face d'appui 2, la face opposée étant notée 3. Une ouverture circulaire 4 permet le passage d'une partie de l'organe de jonction, qui est alors en appui, par l'élément polygonal 104, contre la face d'appui 2 de ladite plaquette. En l'espèce, l'ouverture 4 se prolonge supérieurement par une échancrure 5 qui débouche au niveau du bord supérieur 6 de la plaquette 1. Dans le cas d'une telle échancrure 5, on peut retirer l'ensemble des deux tubes avec son organe de jonction en faisant passer le tube rigide par l'échancrure. Il est à noter qu'un tel retrait est possible avec le cavalier de l'invention, sans qu'il soit nécessaire de démonter la jonction, ce qui n'était pas possible avec les clips en oméga de l'art antérieur. En l'absence d'une telle échancrure, le dégagement de l'ensemble ne peut se faire qu'en tirant du côté opposé à la direction d'appui contre la face de la plaquette.

Le cavalier 10 précédemment décrit est représenté sur la figure 3 à l'état mis en place, et on constate alors que la base 11 de ce cavalier est en appui sur le bord supérieur ici rectiligne 6 de la plaquette 1. Il est important de noter que le cavalier 10 enjambe la plaquette 1 lorsque ledit cavalier est mis en place.

Du côté de la face d'appui 2 de la plaquette 1, on trouve la première fourche 12, dont les deux branches 13 enjambent l'élément polygonal 104, ici hexagonal, avec un contact entre les deux bords rectilignes opposés parallèles du contour 16 et deux faces parallèles opposées de l'élément hexagonal 104. Toute tendance à la rotation de l'organe de jonction autour de son axe a pour effet de transmettre un effort de rotation au cavalier 10, lequel effort est contrecarré par la butée d'appui de la base 11 dudit cavalier sur le bord supérieur 6 de la plaquette 1. A ce propos, le bord d'appui de la plaquette devra présenter une géométrie adéquate pour assurer l'appui nécessaire de la base du cavalier : on pourra ainsi prévoir un bord d'appui rectiligne, comme illustré ici, ou encore des bossages d'appui. C'est ainsi que la fonction d'anti-rotation précédemment exposée est assurée grâce au contour interne 16 de la première fourche 12, qui est agencée pour coopérer avec l'élément hexagonal 104 de l'organe de jonction 100 en vue d'un blocage en rotation dudit organe de jonction.

De l'autre côté, la deuxième fourche 22 enjambe la portion cylindrique de plus petit diamètre 106 par ses deux branches 23 et, en position de mise en place, on constate que chacune des branches 23, grâce à son cintrage particulier, vient en appui à la fois contre la face 3 de la plaquette 1 et contre l'épaulement terminal 108 de la portion de prolongement, afin de solliciter l'organe de jonction 100 contre la face d'appui 2 de la plaquette 1, en assurant ainsi le maintien en translation dudit organe de jonction. En l'espèce, chaque branche 23 de la deuxième fourche 22 du cavalier 10 présente un cintrage qui est agencé pour définir un double appui sur la plaquette et un appui central sur l'épaulement terminal 108 de l'organe de jonction 100. Ceci est défini par une première ligne de pliage 25 correspondant à un premier appui sur la face 3 de la plaquette 1, et à une deuxième ligne notée 27 correspondant à l'appui central sur l'épaulement terminal 108, l'autre appui contre la même face 3 étant ici assuré par le bord d'extrémité 26 de chaque branche 23.

Si l'on revient maintenant à la figure 2, on constate que chaque branche 13 de la première fourche 12 présente, au niveau de son contour interne, un décrochement 17 qui est ainsi agencé pour coopérer avec l'élément hexagonal 104 de l'organe de jonction 100, afin d'empêcher l'éjection du cavalier 10 mis en place. En l'espèce, le décrochement 17 constitue une transition entre deux portions rectilignes parallèles, qui délimitent ainsi l'espace central dans sa partie la plus large, avec une largeur correspondante à la cote D de l'élément hexagonal 104, et une partie débouchante plus étroite, de largeur d suffisante pour enjamber la portion écrasée 103 de l'organe de jonction.

Le cavalier 10 ainsi illustré assure une triple fonction, à savoir un maintien en translation de l'organe de jonction, une anti-rotation, et une anti-éjection du cavalier mis en place.

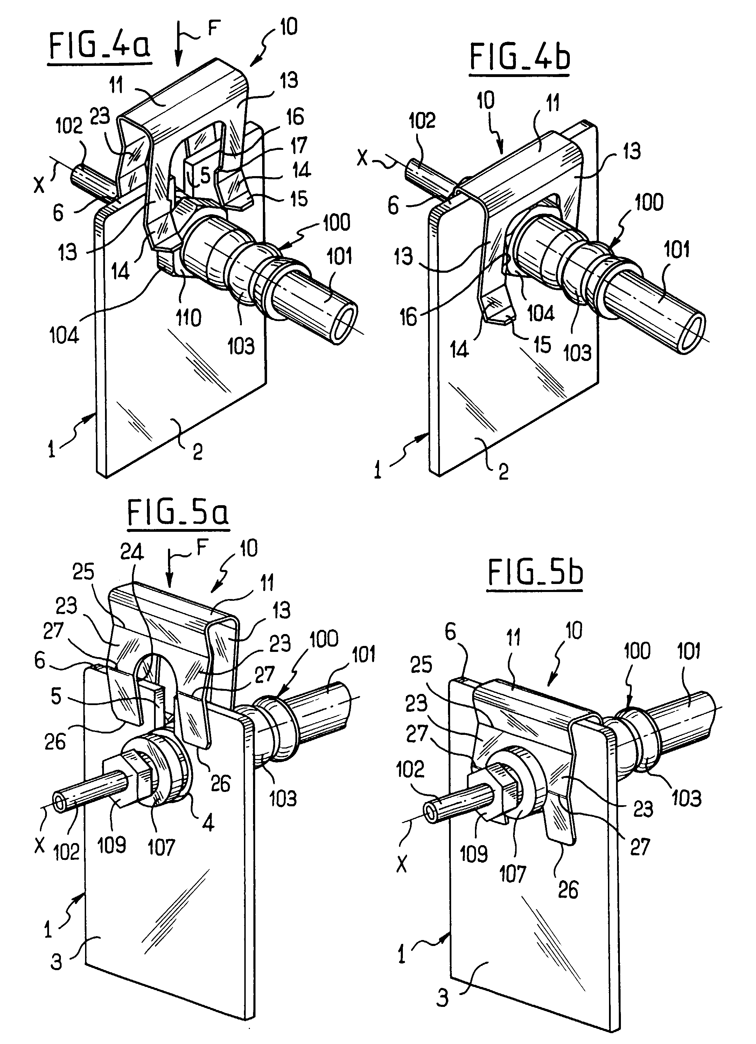

Ainsi que cela a été dit plus haut, les branches 13 de la première fourche 12 présentent une extrémité 14 inclinée vers l'extérieur. Cette extrémité inclinée 14 constitue une rampe d'appui à l'insertion du cavalier 10, en coopérant avec la face externe, notée 110, de l'élément polygonal 104 de l'organe de jonction 100. Ceci sera mieux compris à la lumière des explications qui vont suivre en référence aux figures 4a et 4b.

Sur la figure 4a, le cavalier 10 du type précité est mis en place au-dessus de l'organe de jonction 100 qui est déjà installé dans l'ouverture de la plaquette 1. Les branches 13 et 23 du cavalier 10 sont déjà disposées de part et d'autre de la plaquette, en position d'enjambement de ladite plaquette. Lorsque le cavalier 10 est poussé vers l'organe de jonction, conformément à la direction de la flèche notée F, les extrémités inclinées 14 viennent alors glisser sur la face extérieure 110 de l'élément hexagonal 104. Il suffit à l'opérateur de pousser manuellement le cavalier 10, jusqu'à ce que la base 11 du cavalier vienne en contact avec le bord supérieur 6 de la plaquette 1, et ensuite, si nécessaire, de faire tourner l'ensemble tubulaire autour de l'axe X, de façon à amener l'élément hexagonal 104 dans sa position d'indexage par encliquetage, position dans laquelle les deux branches 13 viennent alors passer le long des deux faces opposées concernées, avec leur décrochement 17 qui vient en-dessous et en retrait de ces faces, comme cela est illustré sur la figure 3. Il est intéressant pour cela de prévoir que le cavalier 10 est réalisé en acier à ressort, de façon que les branches 13 présentent une certaine élasticité naturelle tendant à faire reculer ces deux branches vers la plaquette 1 dès que la position d'indexage est atteinte, ce qui accomplit automatiquement le verrouillage d'anti-rotation et anti-éjection.

Les figures 5a et 5b illustrent la même mise en place, vue de l'autre côté de la plaquette. On distingue alors les deux branches 23 de la deuxième fourche 22 qui viennent enjamber la portion de plus petit diamètre de l'organe de jonction 100 en venant s'appuyer, au niveau des lignes 25 et 26 contre la face 3 de la plaquette 1, et au niveau des lignes 27 contre l'épaulement défini par la portion 107 de plus gros diamètre. Sur les figures 5a et 5b, on a illustré un écrou de fixation terminal 109 associé à l'organe de jonction 100, mais ceci ne constitue naturellement qu'un exemple purement illustratif.

En position de mise en place, on obtient ainsi un maintien parfaitement fiable, tant en rotation qu'en translation, de l'organe de jonction par rapport à la plaquette de support. Un tel maintien résiste parfaitement à des percussions ou à des vibrations, de sorte que l'application au domaine de la construction automobile est particulièrement intéressant.

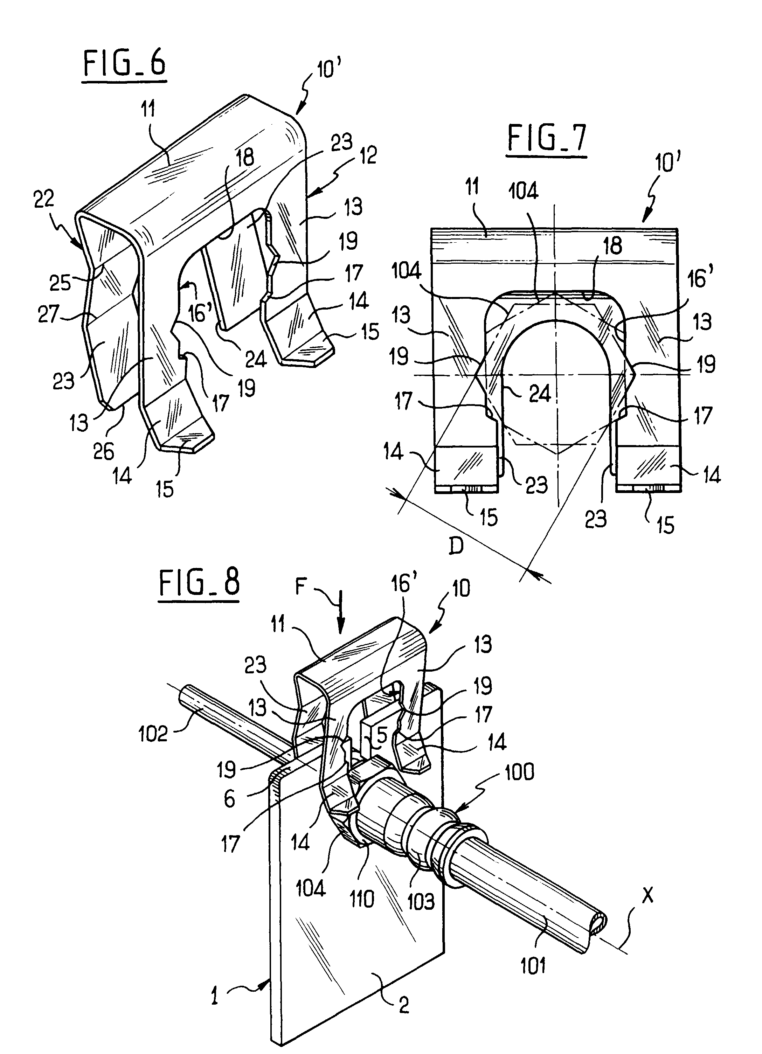

On va maintenant décrire une variante du cavalier précité, en se référant aux figures 6 à 8.

Le cavalier 10' illustré sur les figures 6 à 8 comporte un grand nombre d'éléments qui sont identiques au cavalier 10 précédemment décrit, lesquels éléments seront donc affectés des mêmes références et ne feront pas l'objet d'une nouvelle description. Le cavalier 10' se distingue uniquement du cavalier 10 précédemment décrit par un agencement différent du contour interne 16' délimité par les deux branches 13 de sa première fourche 12. En effet, ce contour interne 16' présente, au niveau de chaque branche 13, une encoche 19 qui est agencée pour coopérer avec l'élément polygonal 104 de l'organe de jonction 100 pour à la fois assurer l'anti-rotation dudit organe de jonction et empêcher l'éjection du cavalier 10' mis en place. En l'espèce, s'agissant d'un élément polygonal 104, chaque encoche 19 constituée par deux tronçons formant un angle de 120°, de façon à recevoir deux pointes opposées de l'élément hexagonal 104.

Un telle encoche 19 réalise ainsi simultanément la fonction d'anti-rotation, et la fonction d'anti-éjection du cavalier mis en place.

Dans le mode de réalisation illustré ici, on constate que le cavalier 10' présente également, au niveau de chacune de ses deux branches 13, le décrochement 17 tel que précédemment décrit. Dans ce cas, avec un décrochement 17 séparant deux tronçons rectilignes parallèles, on obtient deux positions d'indexage angulaire, qui sont illustrées sur la figure 7. Dans la deuxième position d'indexage, qui correspond à celle du cavalier 10 précédemment décrit, les décrochements 17 assurent la fonction anti-éjection du cavalier mis en place.

La mise en place du cavalier 10' se fait par ailleurs exactement de la même façon que pour le cavalier 10 précédemment décrit, et la figure 8 illustre ainsi la mise en place de ce cavalier sur la plaquette 1.

Dans tous les cas, on a prévu que chaque extrémité de branche 14 se terminait par une languette 15 pliée vers l'extérieur. Une telle languette permet de faciliter l'extraction du cavalier 10 ou 10' : en effet, en attrapant les deux branches 13 par les languettes saillantes 15, on peut alors déformer élastiquement lesdites branches jusqu'à ce qu'elles puissent glisser sur la face externe 110 de l'élément polygonal 104, ce qui permet alors de libérer la fonction anti-éjection et de retirer le cavalier 10 ou 10' de la plaquette 1.

Ainsi que cela est mieux visible sur la figure 3 qui peut aussi bien concerner le cavalier 10 que le cavalier 10', lorsque ce cavalier est mis en place, l'appui central 27 des branches 23 de la deuxième fourche 22 est situé au niveau de l'axe X de l'ouverture 4 de la plaquette 1. Ainsi, l'effort d'appui exercé au niveau de l'épaulement 108 ne génère aucune force tendant à déplacer l'organe de jonction par rapport à l'axe X de l'ouverture 4, le centrage de l'organe de jonction étant assuré par la portion cylindrique 105 qui est reçue dans l'ouverture 4.

Il va de soi que l'invention n'est pas limitée aux modes de réalisation qui viennent d'être décrits, mais englobe au contraire toute variante reprenant, avec des moyens équivalents, les caractéristiques essentielles énoncées plus haut.

En particulier, on pourra remplacer l'agencement de l'élément polygonal par tout autre agencement non circulaire, par exemple ovale, elliptique, ou rectangulaire avec deux demi-cercles de prolongement, le contour interne de la première fourche du cavalier présentant alors une forme homologue pour obtenir l'anti-rotation désirée, et éventuellement aussi l'anti-éjection du cavalier mis en place.

## Revendications

1. Dispositif de fixation destiné à assujettir un organe (100) de jonction de tubes à une plaquette (1) qu'il traverse par une ouverture (4) associée, ledit organe de jonction étant en appui contre une face (2) de la plaquette (1) par un élément polygonal (104) analogue à un écrou et se prolongeant au-delà de ladite plaquette par une portion (106, 107) passant dans ladite ouverture et présentant un épaulement terminal (108), caractérisé en ce qu'il est constitué par un cavalier (10 ; 10') destiné à enjamber la plaquette (1) en prenant appui par sa base (11) sur un bord libre de celle-ci, ledit cavalier présentant, du côté de la face d'appui (2), une première fourche (12) dont les deux branches (13) délimitent un contour interne (16 ; 16') agencé pour coopérer avec l'élément polygonal (104) de l'organe de jonction (100) en vue d'un blocage en rotation dudit organe de jonction, et, de l'autre côté, une deuxième fourche (22) dont les deux branches (23) sont destinées à enjamber la portion de prolongement (106, 107) de l'organe de jonction (100), et sont cintrées pour venir en appui à la fois contre l'autre face (3) de la plaquette (1) et contre l'épaulement terminal (108) de ladite portion de prolongement afin de solliciter l'organe de jonction (100) contre la face d'appui (2) de la plaquette (1) en assurant ainsi un maintien en translation dudit organe de jonction.

2. Dispositif selon la revendication 1, caractérisé en ce que le contour interne (16 ; 16') de la première fourche (12) du cavalier (10 ; 10') présente, au niveau de chaque branche (13), un décrochement (17) agencé pour coopérer avec l'élément polygonal (104) de l'organe de jonction (100) pour empêcher l'éjection du cavalier (10 ; 10') mis en place.

3. Dispositif selon la revendication 1, caractérisé en ce que le contour interne (16') de la première fourche (12) du cavalier (10) présente, au niveau de chaque branche (13), une encoche (19) agencée pour coopérer avec l'élément polygonal (104) de l'organe de jonction (100) pour à la fois assurer l'anti-rotation dudit organe de jonction et empêcher l'éjection du cavalier (10') mis en place.

4. Dispositif selon les revendications 2 et 3, caractérisé en ce que le contour interne (16') de la première fourche (12) du cavalier (10') présente à la fois, au niveau de chaque branche (13), un décrochement (17) et une encoche (19), qui sont agencés pour produire deux positions d'indexage angulaire.

5. Dispositif selon l'une des revendications 1 à 4, caractérisé en ce que les branches (13) de la première fourche (12) présentent une extrémité (14) inclinée vers l'extérieur, formant rampe d'appui à l'insertion du cavalier (10 ; 10') coopérant avec la face externe (110) de l'élément polygonal (104) de l'organe de jonction (100).

6. Dispositif selon la revendication 5, caractérisé en ce que chaque extrémité de branche (14) se termine par une languette (15) pliée vers l'extérieur destinée à faciliter l'extraction du cavalier (10 ; 10') mis en place.

7. Dispositif selon l'une des revendications 1 à 6, caractérisé en ce que chaque branche (23) de la deuxième fourche (22) du cavalier (10 ; 10') présente un cintrage agencé pour définir un double appui (25, 26) sur la plaquette (1) et un appui central (27) sur l'épaulement terminal (108) de l'organe de jonction (100).

8. Dispositif selon la revendication 7, caractérisé en ce que, lorsque le cavalier (10 ; 10') est mis en place, l'appui central (27) des branches (23) de la deuxième fourche (22) est situé au niveau de l'axe de l'ouverture (4) de la plaquette (1).

9. Dispositif selon l'une des revendications 1 à 8, caractérisé en ce que le cavalier (10 ; 10') est réalisé en acier à ressort.

## Patentansprüche

1. Befestigungsvorrichtung zum Montieren eines Rohrverbindungselementes (100) an einer Platte (1), die es in einer zugehörigen Öffnung (4) durchsetzt, wobei das Verbindungselement über ein polygonales, mutterartiges Element (104) mit einer Oberfläche (2) der Platte (1) in Kontakt tritt und sich außerhalb dieser Platte durch einen Abschnitt (106, 107) fortsetzt, der durch die Öffnung hindurch verläuft und eine abschließende Schulter (108) hat, dadurch **gekennzeichnet**, daß die Befestigungsvorrichtung eine Klemme (10; 10') umfaßt, die dazu vorgesehen ist, die Platte (1) zu überspannen, indem sie mit ihrer Basis (11) auf einem freien Rand der Platte aufliegt, wobei die Klemme auf der Seite der Kontaktfläche (2) einen ersten gegabelten Schenkel (12) hat, dessen beide Arme (13) eine innere Kontur (16; 16') abgrenzen, die mit dem polygonalen Element (104) des Verbindungselementes (100) zum Blockieren der Drehbewegung des Verbindungselementes zusammenwirkt, und auf der anderen Seite einen zweiten gegabelten Schenkel (22) hat, dessen beide Arme (23) dazu vorgesehen sind, den Fortsetzungsabschnitt (106, 107) des Verbindungselementes (100) zu übergreifen und gekrümmt sind, um gleichzeitig mit der anderen Oberfläche (3) der Platte (1) und der abschließenden Schulter (108) des Fortsetzungsabschnittes in Kontakt zu kommen, wodurch das Verbindungselement (100) gegen die Kontaktfläche (2) der Platte (1) gedrückt, und so der Halt des Verbindungselementes gegenüber einer Translation sichergestellt wird.

2. Vorrichtung nach Anspruch 1, dadurch **gekennzeichnet**, daß die innere Kontur (16; 16') des ersten gegabelten Schenkels (12) der Klemme (10; 10') im Bereich jedes Armes (13) eine Schräge (17) aufweist, die derart angeordnet ist, daß sie mit dem polygonalen Element (104) des Verbindungselementes (100) zusammenwirkt, um so ein Abstoßen der aufgesteckten Klemme (10; 10') zu verhindern.

3. Vorrichtung nach Anspruch 1, dadurch **gekennzeichnet,** daß die innere Kontur (16') des ersten gegabelten Schenkels (12) der Klemme (10) im Bereich jedes Armes (13) eine Einkerbung (19) hat, die derart angeordnet ist, daß sie mit dem polygonalen Element (104) des Verbindungselementes (100) zusammenwirkt, um gleichzeitig die Blockierung der Drehbewegung des Verbindungselementes sicherzustellen und das Abstoßen der aufgesteckten Klemme (10') zu verhindern.

4. Vorrichtung nach den Ansprüchen 2 und 3, dadurch **gekennzeichnet**, daß die innere Kontur (16') des ersten gegabelten Schenkels (12) der Klemme (10') im Bereich jedes Armes (13) sowohl eine Schräge (17) als auch eine Einkerbung (19) hat, die derart ausgebildet sind, daß zwei Drehwinkel-Raststellungen erzeugt werden.

5. Vorrichtung nach einem der Ansprüche 1 bis 4, dadurch **gekennzeichnet,** daß die Arme (13) des ersten gegabelten Schenkels (12) einen schräg nach außen geneigten Endabschnitt (14) haben, wodurch eine Führungsrampe zum Aufsetzen der Klemme (10; 10') entsteht, die mit der Außenfläche (110) des polygonalen Elementes (104) des Verbindungselementes (100) in Kontakt tritt.

6. Vorrichtung nach Anspruch 5, dadurch **gekennzeichnet,** daß jeder Endabschnitt (14) der Arme in einer nach außen gebogenen Lasche (15) endet, die dazu vorgesehen ist, das Abnehmen der aufgesetzten Klemme (10; 10') zu ermöglichen.

7. Vorrichtung nach einem der Ansprüche 1 bis 6, dadurch **gekennzeichnet,** daß jeder Arm (23) des zweiten gegabelten Schenkels (22) der Klemme (10; 10') derart gekrümmt ist, daß diese Krümmung einen doppelten Kontakt (25, 26) mit der Platte (1) und einen zentralen Kontakt (27) mit der abschließenden Schulter (108) des Verbindungselementes (100) definiert.

8. Vorrichtung nach Anspruch 7, dadurch **gekennzeichnet,** daß sich der zentrale Kontakt (27) der Arme (23) des zweiten gegabelten Schenkels (22) bei aufgesetzter Klemme in Höhe der Achse der Öffnung (4) der Platte befindet.

9. Vorrichtung nach einem der Ansprüche 1 bis 8, dadurch **gekennzeichnet,** daß die Klemme (10; 10') aus Federstahl hergestellt ist.

## Claims

1. A fastener device for holding a tube junction member (100) to a plate (1) through which it passes via an associated opening (4), said junction member bearing against a stop face (2) of the plate (1) via a polygonal element (104) analogous to a nut and extending beyond said plate by means of a portion (106, 107) passing through said opening and having a terminal shoulder (108), the fastener device being characterized in that it is constituted by a rider (10; 10') for placing astride the plate (1) so that a spine thereof (11) presses against a free edge of the plate, said rider having, adjacent to the stop face (2), a first fork (12) whose two branches (13) define an internal outline (16; 16') designed to co-operate with the polygonal element (104) of the junction member (100) to prevent said junction member from rotating, and on the other side, it has a second fork (22) whose two branches (23) are placed astride the extension (106, 107) of the junction member (100), and are bent to bear against both the other face (3) of the plate (1) and against the terminal shoulder (108) of said extension portion so as to urge the junction member (100) against the stop face (2) of the plate (1), thereby holding said junction member in translation.

2. A device according to claim 1, characterized in that the internal outline (16; 16') of the first fork (12) of the rider (10; 10') has a step (17) in each branch (13) for cooperating with the polygonal element (104) of the junction member (100) to prevent ejection of the rider (10; 10') once installed.

3. A device according to claim 1, characterized in that the internal outline (16') of the first fork (12) of the rider (10) has a notch (19) in each branch (13) designed to co-operate with the polygonal element (104) of the junction member (100) so as to simultaneously prevent said junction member from rotating and prevent the rider (10'), once installed, from being ejected.

4. A device according to claims 2 and 3, characterized in that the internal outline (16') of the first fork (12) of the rider (10') has, in each branch (13), both a step (17) and a notch (19) which are designed to produce two different angular indexing positions.

5. A device according to any one of claims 1 to 4, characterized in that the branches (13) of the first fork (12) have outwardly sloping ends (14) forming ramps that act, during installation of the rider (10; 10'), to co-operate with the outside face (110) of the polygonal element (104) of the junction member (100).

6. A device according to claim 5, characterized in that each branch end (14) is terminated by an outwardly folded tab (15) designed to facilitate extraction of the rider (10; 10') once it has been put into place.

7. A device according to any one of claims 1 to 6, characterized in that each branch (23) of the second fork (22) of the rider (10; 10') is bent in such a manner as to define two bearing points (25, 26) against the plate (1), plus a central bearing point (27) against the terminal shoulder (108) of the junction member (100).

8. A device according to claim 7, characterized in that when the rider (10; 10') is in place, the central bearing point (27) of each of the branches (23) of the second fork (22) is level with the axis of the opening (4) through the plate (1).

9. A device according to any one of claims 1 to 8, characterized in that the rider (10; 10') is made of spring steel.
